# EUROPEAN PATENT APPLICATION

(11) **EP 4 410 609 A1**
(43) Date of publication of application: **07.08.2024**
(21) Application number: 23154474.3
(22) Date of filing: 01.02.2023
(51) Int. Cl.: B60R 25/01, B60R 25/24, B60R 25/20, G07C 9/00

(54) **METHOD FOR IMPROVING AN UNLOCKING OF A FLAP OF A VEHICLE, APPARATUS, VEHICLE AND COMPUTER PROGRAM**

(71) Applicant: Bayerische Motoren Werke Aktiengesellschaft, 80809 München (DE)
(72) Inventor: Heidmann, Fanny, 80796 München (DE)

(57) **Abstract**

Embodiments relate to a method 100 for improving an unlocking of a flap of a vehicle. The method 100 comprises obtaining 110 context data indicative of a usage of the vehicle. Further, the method 100 comprises determining 120 usage data indicative of an intended usage of the flap based on the context data and unlocking 130 the flap based on the usage data.

## Description

The present disclosure relates to the field of digital vehicle access. Embodiments relate to a method for improving an unlocking of a flap of a vehicle, an apparatus, a vehicle and a computer program.

Existing systems for unlocking/opening a flap of a vehicle, for example a tailgate of a trunk or a front edge of a frunk, use so-called smart openers which, for example, enable opening by means of a gesture executed with a foot. In particular, this allows the flap to be opened without the use of hands. Other methods use detection of the time user equipment is in the immediate vicinity of a door that is to be opened. In this case, the door can be opened after a predefined period of time has elapsed. Both the gesture to be performed with a foot and waiting for a door to open can be perceived as unpleasant by a user. Thus, there may be a need to improve an unlocking of a flap of a vehicle.

It is therefore a finding that flap of a vehicle can be unlocked based on usage data indicative of an intended usage of the flap. The usage data is determined based on context data. Thus, the context data indicative of the usage of the vehicle can be used for unlocking the flap of the vehicle. In this way, the unlocking can be improved, e.g., an accuracy can be increased by reducing false positive events and/or a user experience can be increased.

Examples provide a method for improving an unlocking of a flap of a vehicle. The method comprises obtaining context data indicative of a usage of the vehicle. Further, the method comprises determining usage data indicative of an intended usage of the flap based on the context data. Further, the method comprises unlocking the flap based on the usage data. The usage data determined based on the context data may allow predicting an intention of a user of the vehicle to access a storage compartment covered by the flap, such as a trunk or a trunk. In this way, an unlocking of the flap of the vehicle can be improved based on the determined intended usage (or user intention).

In an example, the context data may be indicative of at least one of a time, a location, a previous use of the flap, an inventory of a storage compartment covered by the flap and/or a route of the vehicle. For example, a user may approach at a certain time and a location with the vehicle, e.g., a working place, multiple times a week. Thus, based on the time and the location the flap can be unlocked if the time and location match the parameters of the working day and the working place. In this way, an accuracy of unlocking the flap can be improved.

In an example, the method may further comprise receiving identification data indicative of a user of the vehicle and determining the usage data based on the identification data. By receiving identification data a user behavior corresponding to the user can be utilized for unlocking the flap. For example, the identification data may indicate that the user works at a specific working place. In this way, the flap can be unlocked if the vehicle stops at the specific working place.

In an example, the identification data is received from a digital key of the user the vehicle. In this way, the identification information can be received in a facilitated way, since the digital key may be unique for each user.

In an example, obtaining the context data may comprise receiving sensor data indicative of an object stored in a storage compartment covered by the flap. In this way, the intended usage to access the storage compartment can be determined in a more precise way. For example, a briefcase may be stored in the storage compartment. Thus, the likelihood that the user may intent to access the storage compartment at his working place may be increased.

In an example, determining the usage data may comprise comparing the context data with statistic data, received from a database, indicative of the user behavior. Based on the statistic data the determination of the intended usage can be improved. For example, if the user normally accesses a storage compartment covered by the flap at a certain location, e.g., a working place, the likelihood that the user may intent to access the storage compartment at this location may be increased. In this way, an accuracy of unlocking the flap can be increased.

In an example, the method may further comprise locking the flap based on usage data. In this way, it can be ensured that the storage compartment is not accessible to a third person.

Examples relate to an apparatus, comprising interface circuitry configured to communicate with user equipment and/or a sensor and processing circuitry configured to perform a method as described above. Examples relate to a vehicle, comprising an apparatus as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method 100 for improving an unlocking of a flap of a vehicle; and
Fig. 2 shows a block diagram of an example of an apparatus, e.g., part of a vehicle.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

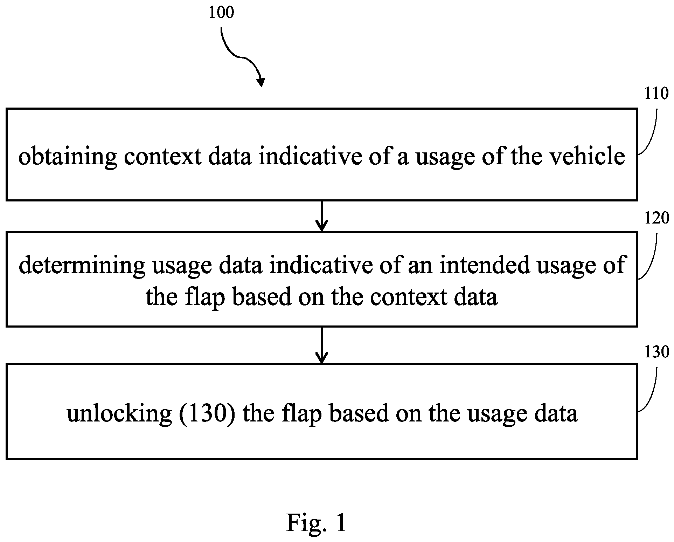

Fig. 1 shows an example of a method 100 for improving an unlocking of a flap of a vehicle. The method 100 comprises obtaining 110 context data indicative of a usage of the vehicle. The flap may be a cover of a storage compartment such as a trunk or trunk. The context data may be obtained by receiving, e.g., from a sensor (as described below), from a database and/or by determining, e.g., based on data indicative of the user behavior.

Further, the method 100 comprises determining 120 usage data indicative of an intended usage of the flap based on the context data. The usage data may be determined by the processing circuitry of an apparatus (see Fig. 3) configured to perform the method 100. The usage data may indicate a likelihood of a usage of the flap by a user of the vehicle. For example, the usage data may indicate the user intention to access a storage compartment of a vehicle, e.g., to store an object in the storage compartment and/or to take an object out of the storage compartment.

Further, the method 100 comprises unlocking 130 the flap based on the usage data. Unlocking the flap may comprise solely an unlock of the flap, such that the flap could be opened. For example, a mechanism may be configured to open the flap after the flap was unlocked. For example, a gas spring may be used to open the flap. Optionally, the method 100 may further comprise opening the flap. For example, a processing circuitry configured to perform the method 100 may be further configured to transmit a control signal to an actuator, such that the processing circuitry can control the actuator to open the flap.

By use of the context data, such like patterns of a user behavior regarding a usage of the flap a determination of an intended usage can be improved. For example, a pattern of the user behavior may be learned from a plurality of users without any restriction to the users. Additionally or alternatively, a pattern may be learned from a specified subcategory of users, such like employees of the same company, women or men (which might have different usage of the trunk because of different bag types). Additionally or alternatively, a pattern may correspond to a specific vehicle, e.g., the pattern may be learned from the plurality of users of a vehicle. Additionally or alternatively, a pattern may correspond to a user of the vehicle, e.g., a single user identified by his digital key.

Optionally, these pre-learnt patterns can be used to infer the user's intent in a new scenario. For example, if the user regularly accesses a storage compartment of a vehicle at a certain time, the flap may be unlocked when the vehicle holds during this time independently of a location.

To obtain 110 the context data by determining a pattern several measures can be taken. For example, a history of past unlocking/locking events can be exploited, a typical location of a parking place associated with unlocking/locking can be considered, a use time of the vehicle, an inventory of the storage compartment covered by the flap.

By determining the pattern corresponding to the user intention to use a storage compartment, such that an unlocking of the flap may be intended, a user experience can be improved. Further, the intended usage can be used to determine a locking (and optionally closing) of the flap. In this way, the user experience can be further improved.

In an example, the context data may be indicative of at least one of a time, location, a previous use of the flap, an inventory of a storage compartment covered by the flap and/or a route of the vehicle.

For example, a certain user can be willing to unload his work bag every working day around 8am and load it again around 5pm. A user can be willing to load and unload its tennis racket every Saturday at 2pm for a game, for example. Further, a user may always go shopping to the supermarket on Saturday afternoon. In that use case, multiple rounds of unloading will be necessary, hence the trunk should stay open even when the user goes away.

For example, in some parking places, such like in front of supermarket, the house of the user, a store, the user may be likely to unlock the flap to store/take out groceries. For example, for a trunk/frunk a likelihood of an intended usage is increased in a parking place at, e.g., supermarkets, shops, gym studio, in a vacation place localized far away from the user's home. For example, for a trunk/frunk a likelihood of an intended usage is increased near a charging station (since users typically store AC charging cables in the trunk/frunk).

For example, if a flap was unlocked at the beginning of a drive, it is likely that the user will be willing to unlock the flap at the end of the drive, to unload something from a storage compartment. Thus, the unlocking at the beginning of the drive can be used as context data to determine the intended usage at the end of the drive.

For example, maintaining an inventory of a storage compartment covered by the flap can be performed by use of a sensor, e.g., RADAR sensor, camera, UWB sensor, Bluetooth sensor or weight sensor, which can weight the trunk/frunk content. Additionally to objects, an animal in the storage compartment can be detected with a RADAR sensor, similarly to technologies used for Child Presence Detection (UWB-based radar). This inventory can be used to predict the user intention to unload its vehicle. For example, if the inventory of the storage compartment is not fully unloaded, the user may go back and forth to the storage compartment for multiple unloading rounds, which can be predicted based on the inventory of the storage compartment.

Thus, using the context data may allow improving the determination 120 of the intended usage of the flap. In this way, an unlocking of the flap can be improved. For example, an unlocking/locking of the flap can be improved in comparison to using solely a trajectory for determining an opening of a trunk.

To determine the pattern AI-based methods, techniques like Clustering or predictive models can be used, for example.

In an example, the method may further comprise receiving identification data indicative of a user of the vehicle and determining the usage data based on the identification data. The identification data may allow an identification of a user using the vehicle. For example, the pattern may be linked to the user of the vehicle. In this way, the user intention can be determined based on user specific data, which may improve the determination of the intended usage.

In an example, the identification data is received from a digital key of the user of the vehicle. For example, the user may use user equipment configured to unlock/start the vehicle. Thus, the vehicle can determine the identification data based on the certificate of the digital key of the user equipment. In this way, the identification data can be determined in a facilitated way.

In an example, obtaining the context data may comprise receiving sensor data indicative of an object stored in a storage compartment covered by the flap. For example, the sensor data may be received from a sensor of the vehicle. The sensor may be a camera, a RADAR sensor, a LIDAR sensor, a UWB sensor. The sensor data may be used to determine an inventory of the storage compartment. In this way, the inventory of storage compartment can be combined with other context data, such like location or time to determine the intended usage. In this way, the determination of the intended usage can be improved.

In an example, determining the usage data may comprise comparing the context data with statistic data indicative of the user behavior. The statistic data is received from a database. The statistic data may comprise information about patterns as described above and/or user intentions observed for previous use cases. The database may be a server or a storage device part of the vehicle, for example. The statistic data may be used to perform AI-based methods, techniques like Clustering or predictive models can be used, for example.

In an example, the method may further comprise locking the flap based on usage data. In this way, it can be ensured that the storage compartment is not accessible to a third person.

In general, the vehicle may comprise a communication device. The communication device may be a device that is capable of communicating wirelessly. In particular, however, the communication device may be a mobile user equipment, e.g., user equipment that is suitable for being carried around by a user. For example, the communication device may be a user terminal or user equipment within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses.

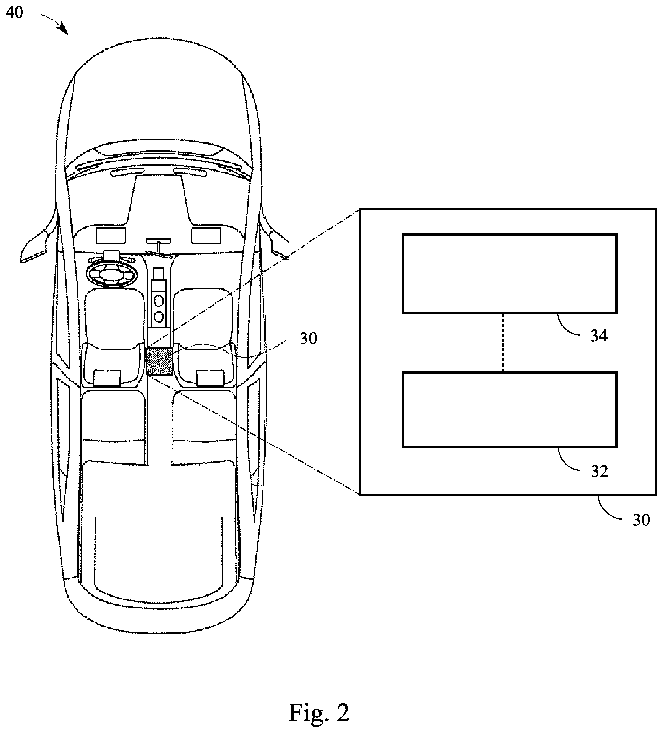

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2).

Fig. 2 shows a block diagram of an example of an apparatus 30 for a vehicle 40. The apparatus 30 comprises interface circuitry 32 configured to communicate with a sensor, a database and/or user equipment and processing circuitry 34 configured to perform a method as described above, e.g., the method for a vehicle as described with reference to Fig. 1. For example, the apparatus 30 may be part of the vehicle 40, e.g., part of a control unit of the vehicle 40.

For example, the vehicle 40 may be a land vehicle, such a road vehicle, a car, an automobile, an off-road vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 2 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g., any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 2 may comprise one or more optional additional features corresponding to one or more aspects mentioned in connection with the proposed concept or one or more examples described above (e.g., Fig. 1).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
40 vehicle
100 method
110 obtaining context data
120 determining usage data
130 unlocking the flap

## Claims

1. A method (100) for improving an unlocking of a flap of a vehicle, comprising:
obtaining (110) context data indicative of a usage of the vehicle;
determining (120) usage data indicative of an intended usage of the flap based on the context data; and
unlocking (130) the flap based on the usage data.

2. The method (100) according to claim 1, wherein
the context data may be indicative of at least one of a time, a location, a previous use of the flap, an inventory of a storage compartment covered by the flap or a route of the vehicle.

3. The method (100) according to any one of the preceding claims, further comprising
receiving identification data indicative of a user of the vehicle; and
determining the usage data based on the identification data.

4. The method (100) according to claim 3, wherein
the identification data is received from a digital key of the user of the vehicle.

5. The method (100) according to any one of the preceding claims, wherein
obtaining the context data comprises receiving sensor data indicative of an object stored in a storage compartment covered by the flap.

6. The method (100) according to any one of the preceding claims, wherein
determining the usage data comprises comparing the context data with statistic data, received from a database, indicative of a user behavior.

7. The method (100) according to any one of the preceding claims, further comprising locking the flap based on the usage data.

8. An apparatus (30), comprising:
interface circuitry (32) configured to communicate with at least one of a communication device or a sensor; and
processing circuitry (34) configured to perform a method according to any of the preceding claims.

9. A vehicle (40) comprising the apparatus (30) according to claim 8.

10. A computer program having a program code for performing the method (100) according to claim 1 - 8, when the computer program is executed on a computer, a processor, or a programmable hardware component.
